# EUROPÄISCHE PATENTANMELDUNG

(11) **EP 4 385 604 A1**
(43) Veröffentlichungstag der Anmeldung: **19.06.2024**
(21) Anmeldenummer: 23213723.2
(22) Anmeldetag: 01.12.2023
(51) Int. Cl.: B01D 39/08

(54) **FILTERGEWEBE**

(30) Priorität: 14.12.2022 DE 102022133357
(71) Anmelder: Markert Filtration GmbH, 22767 Hamburg (DE)
(72) Erfinder: Trautmann, Philipp, 24536 Neumünster (DE); Düvell, Mirko, 22941 Bargteheide (DE)
(74) Vertreter: Jaeschke, Rainer

(57) **Zusammenfassung**

Die Erfindung betrifft ein Filtergewebe mit Kettfäden und Schussfäden, die miteinander kreuzförmig verwoben sind und ein Filtertuch mit einer in der Gebrauchslage dem Filterkuchen zugekehrten Seite und einer der Filtratablaufseite zugekehrten Seite bilden, bei welchem Filtergewebe wenigstens ein Teil der Kettfäden aus einem ultrahochmolekularen Polyethylen besteht. Gemäß der Erfindung wird vorgeschlagen, dass wenigstens 25 % der Kettfäden aus ultrahochmolekularem Polyethylen besteht.

## Beschreibung

Die Erfindung betrifft ein Filtergewebe mit Kettfäden und Schussfäden, die miteinander kreuzförmig verwoben sind und ein Filtertuch mit einer in der Gebrauchslage dem Filterkuchen zugekehrten Seite und einer dem Filterkuchen abgekehrten Seite bilden, bei welchem Filtergewebe wenigstens ein Teil der Kettfäden aus einem ultrahochmolekularen Polyethylen (UHMWPE-Fäden) besteht. Auf der dem Filtertuch abgekehrten Seite befindet sich bei Filterpressen eine Filterplatte. Es kann sich auf dieser Seite aber auch ein Freiraum befinden, in den das Filtrat abfließt. Es wird im Folgenden auch von der Filtratablaufseite gesprochen, ohne das damit eine Beschränkung verbunden sein soll.

Ein derartiges Filtergewebe ist aus der EP 2 185 264 B1 bekannt. In diesem Gewebe werden alle 1 cm bis 10 cm parallel zu den Schussfäden und parallel zu den Kettfäden Verstärkungsfäden aus ultrahochmolekularem Polyethylen eingewebt, um ein Ausbeulen des Filtertuchs im Betrieb zu verhindern oder zumindest zu reduzieren.

Garne und Fäden aus ultrahochmolekularem Polyethylen sind allgemein bekannt und weisen hervorragende Eigenschaften in Bezug auf die Schnittfestigkeit und Zugfestigkeit auf. Weiterhin sind die Garne relativ abriebfest. Sie werden häufig in Schutzbekleidung, Seilen und Tauen verwendet. Zurückzuführen ist diese Festigkeit auf die hohe Molmasse von 3.000 kg/mol bis 6.000 kg/mol. Herkömmliches Polyethylen hoher Dichte weist eine Molmasse von 200 kg/mol bis 500 kg/mol auf.

Es hat sich gezeigt, dass der Lebensdauer von Filtertüchern bei der Filterung von abrasiven Medien oder Suspensionen, wie sie beispielsweise bei der Erzaufbereitung auftreten, durch den erhöhten Verschleiß Grenzen gesetzt sind. Die das Gewebe bildenden Fäden nutzen durch die ständige Beaufschlagung mit den abrasiven Medien schnell ab. Das Filtergewebe beziehungsweise das Filtertuch wird durchlässig und somit unbrauchbar. Für ein ausreichendes Filterergebnis müssen die Filtertücher daher relativ häufig ersetzt werden. Dies ist mit hohen Betriebskosten verbunden.

Der Erfindung liegt die Aufgabe zugrunde, ein Filtergewebe der eingangs geschilderten Art so auszubilden, dass eine höhere Verschleißfestigkeit erreicht wird.

Die Aufgabe wird gemäß der Erfindung dadurch gelöst, dass wenigstens 25% der Kettfäden aus ultrahochmolekularem Polyethylen (UHMWPE-Fäden) besteht. Diese Kettfäden aus ultrahochmolekularem Polyethylen können an sich beliebig oder vorzugsweise im gleichmäßig verteilt im Filtergewebe vorhanden sein. Es kann beispielsweise vorgesehen werden, dass jeder vierte Kettfaden aus ultrahochmolekularem Polyethylen (UHMWPE-Fäden) besteht. Der Anteil der UHMWPE-Fäden an den Kettfäden beträgt somit 25%. Bei einer Fadenstärke von etwa 0,3 mm und einem Kettfadenabstand von etwa 0,05 mm ist in dem Gewebe demnach alle 0,35 mm ein Kettfaden aus ultrahochmolekularem Polyethylen vorhanden. Es hat sich gezeigt, dass durch einen derart hohen UHMWPE-Kettfäden-Anteil die Verschleißfestigkeit des Filtergewebes deutlich erhöht werden kann.

Es kann vorgesehen werden, dass alle Kettfäden oder mehr als 90% der Kettfäden aus ultrahochmolekularem Polyethylen bestehen. Allerdings ist das Filtergewebe dann aufwändiger in Form zu bringen, da die UHMWPE-Fäden relativ weich sind. Es ist daher gemäß der Erfindung bevorzugt vorgesehen, dass zwischen 60% und 70%, oder zwischen 45% und 55% oder zwischen 30% und 35% der Kettfäden aus ultrahochmolekularem Polyethylen bestehen. Dies kann beispielsweise dadurch erreicht werden, dass jeder zweite und dritte oder nur jeder zweite oder nur jeder dritte Kettfaden aus einem ultrahochmolekularen Polyethylen besteht. Dies entspricht einem Kettfäden-Anteil aus UHMWPE-Fäden von 66,67%, 50,0% beziehungsweise 33,33%.

Die anderen Kettfäden können aus Polyolefin und insbesondere aus Polypropylen bestehen. Diese Kettfäden können beliebig oder auch gleichmäßig im Filtergewebe vorhanden sein. Bei den oben genannten Anteilen der UHMWPE-Kettfäden besteht bei dem Filtergewebe bevorzugt jeder dritte oder jeder zweite Kettfaden oder jeder zweite und dritte Kettfaden oder jeder zweite, dritte und vierte Kettfaden aus Polyolefin und insbesondere aus Polypropylen. Diese Kettfäden können aber auch aus Polyamid- oder Polyester-Garnen gebildet werden. Je größer der Anteil der Kettfäden aus ultrahochmolekularem Polyethylen ist, desto höher wird die Abrieb- und Verschleißfestigkeit.

Gemäß einer bevorzugten Ausführungsform der Erfindung ist vorgesehen, dass die Kettfäden und die Schussfäden derart miteinander verwoben sind, dass ein größerer Teilabschnitt der Kettfäden in der Gebrauchslage auf der dem Filterkuchen zugekehrten Seite als auf der dem Filterkuchen abgekehrten Seite des Filtertuchs verläuft. Bei einer solchen Webart befinden sich in der Gebrauchslage demnach mehr Material aus ultrahochmolekularem Polyethylen auf der dem Filterkuchen zugewandten Seite des Filtertuchs als auf der gegenüberliegenden Seite, die der Filterplatte zugekehrt ist. Das Filtertuch weist daher auf dieser Seite eine erhöhte Abriebfestigkeit auf, und die Standzeit des Filtertuchs wird erhöht.

Das Filtergewebe kann in Form einer an sich bekannten Köperbindung gewebt sein. Dabei kann vorgesehen werden, dass ein Kettfaden zwei oder drei oder mehr nebeneinander liegende Schussfäden auf der Oberseite überspringt und dann nur einen Schussfaden auf der Unterseite unterspringt. Auf der oberen Seite wird der Kettfaden demnach nur durch jeden dritten oder vierten Schussfaden unterbrochen. Dort verläuft daher ein größerer Teilabschnitt des Kettfadens als auf der Unterseite des Filtergewebes. Die Oberseite bildet in der Gebrauchslage die dem Filterkuchen zugekehrte Seite des Filtertuchs. Grundsätzlich können auch andere Webarten, wie die Atlasbindung, verwendet werden. Die verschleißfesten UHMWPE-Fäden verlaufen daher überwiegend auf der dem Filterkuchen zugewandten Seite, die von dem abrasiven Medium beaufschlagt wird. Die verschleißfesten Eigenschaften der UHMWPE-Fäden werden somit besser ausgenutzt.

Die Kettfäden, die nicht aus ultrahochmolekularem Polyethylen sind, können entsprechend der vorgesehenen Webart mit den Schussfäden verwebt sein. Es kann aber auch vorgesehen werden, dass nur die Kettfäden aus ultrahochmolekularem Polyethylen auf der dem Filterkuchen zugekehrten Seite über zwei oder mehrere benachbarte Schussfäden und auf der dem Filterkuchen abgekehrten Seite unter nur einem Schussfaden verlaufen. Dabei kann zudem vorgesehen sein, dass wenigstens ein Kettfaden aus einem Polyolefin oder Polypropylen auf der dem Filterkuchen zugekehrten Seite über einen Schussfaden und auf der der Filtratablaufseite zugekehrten Seite über zwei oder mehrere benachbarte Schussfäden verläuft. Die dem Filterkuchen in der Gebrauchslage des Filtertuchs zugewandte Seite besteht dann überwiegend aus ultrahochmolekularem Polyethylen.

Weiterhin kann vorgesehen werden, dass die Schussfäden aus Polyolefin und insbesondere aus Polypropylen bestehen. Es können als Schussfäden aber auch Polyamid-Garne oder Polyester-Garne verwendet werden. Die Schussfäden können dann zumindest teilweise aus Monofilamentfäden bestehen, die einfacher zu verarbeiten und zudem kostengünstiger als UHMWPE-Fäden sind. Die Kettfäden können zumindest teilweise Multifilamentfäden sein.

Gemäß einer möglichen Ausgestaltung der Erfindung ist vorgesehen, dass nur die Kettfäden ganz oder teilweise aus ultrahochmolekularem Polyethylen bestehen, während die Schussfäden aus einem anderen Material und insbesondere aus einem Polyolefin, Polypropylen, Polyamid oder Polyester bestehen.

Mit einem solchen Filtergewebe wird ein daraus bestehendes Filtertuchs deutlich verschleißfester. Die Betriebskosten können daher reduziert werden. Da nur ein Teil der Webfäden und vorzugsweise auch nur ein Teil der Kettfäden aus ultrahochmolekularem Polyethylen besteht, bleibt das Filtertuch relativ kostengünstig.

Das Filtertuch gemäß der Erfindung eignet sich insbesondere für die Verwendung in Filterpressen. Die Seite mit dem höheren Anteil an UHMWPE-Fäden ist dann dem sich während des Betriebs bildenden Filterkuchen zugewandt, während die andere Seite mit dem niedrigeren Anteil an UHMWPE-Fäden der Filterplatte der Filterpresse zugewandt ist. Diese Seite wird nicht unmittelbar mit dem zu filternden Medium beaufschlagt und unterliegt somit keinem so hohen Verschleiß.

Die Erfindung wird im Folgenden anhand der schematischen Zeichnung näher erläutert. Es zeigen:
- Fig. 1: die Draufsicht auf ein Filtergewebe gemäß der Erfindung und
- Fig. 2: einen Schnitt in Richtung der Kettfäden durch das Filtergewebe in Figur 1.

Das in der Zeichnung ausschnittsweise gezeigte Filtergewebe 10 weist Kettfäden 11, 12 die parallel zueinander in Kettrichtung 13 verlaufen. Dazu senkrecht verlaufen die Schussfäden 14 in Schussrichtung 15.

Bei dem dargestellten Ausführungsform handelt es sich um eine Köperbindung 2/1 (Köper 2 over 1 under), bei welcher ein Kettfäden 11, 12 zunächst zwei unmittelbar nebeneinander liegende Schussfäden 14 überspringt und anschließend einen Schussfaden 14 unterspringt und so weiter. Grundsätzlich kommen auch andere Webarten in Betracht, beispielsweise Köper 3/1 (Köper 3 over 1 under) oder eine Atlasbindung. Weiterhin ist auch eine Leinwandbindung möglich.

Die Kettfäden 11 bestehen aus ultrahochmolekularem Polyethylen-Garn. Die Kettfäden 12 können aus einem Polyolefin und insbesondere aus Polypropylen bestehen. Bei der gezeigten Ausführungsform bestehen somit 50% der Kettfäden aus ultrahochmolekularem Polyethylen-Garn. Die Schussfäden 14 bestehen ebenfalls aus einem Polyolefin, beispielsweise aus Polypropylen. Durch die somit im Filtergewebe 10 vorhandenen und eingewebten UHMWPE-Fäden 11 erhält das Filtertuch eine erhöhte Abriebfestigkeit gegenüber abrasiven Medien.

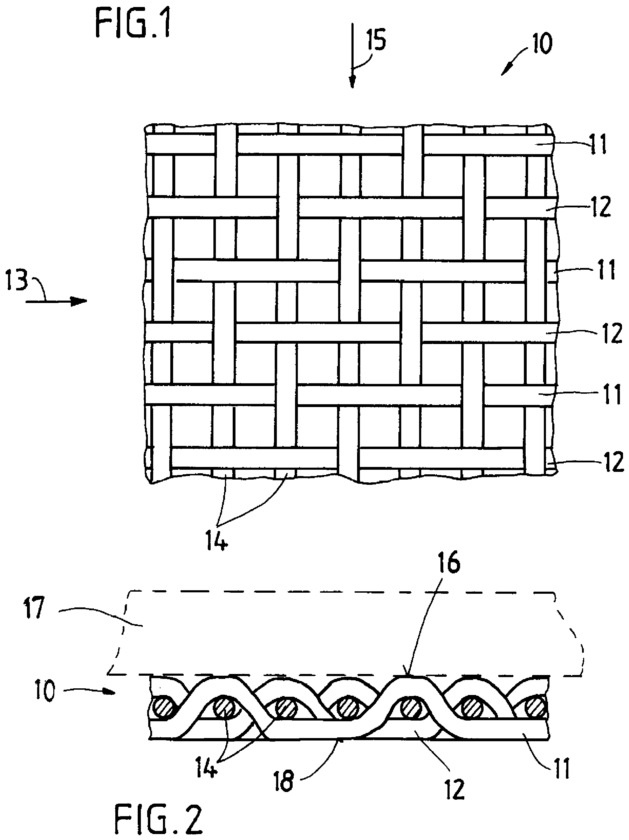

In der Gebrauchslage liegt das Filtergewebe 10 mit seiner einen Seite 16 an einer nicht näher dargestellten Filterplatte 17 an. Die Seite 16 des Filtergewebes 10 entspricht dabei der Unterseite des in Figur 1 gezeigten Gewebes. In der Zeichnung ist lediglich eine Filterplatte 17 gezeigt. Es kann dort auch ein Freiraum oder eine andere Unterstützungseinrichtung, beispielsweise ein Scheibensegment von Scheibenfiltern, eine Trommelwandung von Trommelfiltern oder ein Sieb von Planfiltern vorhanden sein. In der Gebrauchslage ist diese Seite 16 dem Filterkuchen 18 abgewandt und wird auch als Filtratablaufseite bezeichnet.

In der Gebrauchslage befindet sich ein größerer Teilabschnitt oder Längenabschnitt aller Kettfäden 11, 12 auf der der Filtratablaufseite gegenüberliegenden Seite 18 des Filtergewebes 10. Diese Seite 18 ist in der Gebrauchslage dem Filterkuchen zugewandt und unterliegt somit erhöhten abrasiven Beanspruchungen.

Wie aus der Zeichnung ersichtlich, wird durch die gewählte Webart erreicht, dass relativ mehr Material aus ultrahochmolekularem Polyethylen dem Filterkuchen zugewandt ist als der Filtratablaufseite des Filtertuchs. Dadurch werden die abriebfesten Eigenschaften des ultrahochmolekularen Polyethylens besser ausgenutzt.

## Patentansprüche

1. Filtergewebe mit Kettfäden (11, 12) und Schussfäden (14), die miteinander kreuzförmig verwoben sind und ein Filtertuch mit einer in der Gebrauchslage dem Filterkuchen zugekehrten Seite (18) und einer dem Filterkuchen abgekehrten Seite (16) bilden, bei welchem Filtergewebe (10) wenigstens ein Teil der Kettfäden (11) aus ultrahochmolekularem Polyethylen besteht, **dadurch gekennzeichnet, dass** wenigstens 25% der Kettfäden (11) aus ultrahochmolekularem Polyethylen besteht.

2. Filtergewebe nach Anspruch 1, **dadurch gekennzeichnet, dass** zwischen 60% und 70% oder zwischen 45% und 55% oder zwischen 30% und 35% der Kettfäden aus ultrahochmolekularem Polyethylen bestehen.

3. Filtergewebe nach Anspruch 1 oder 2, **dadurch gekennzeichnet, dass** die Kettfäden (11) aus ultrahochmolekularem Polyethylen gleichmäßig im Filtergewebe verteilt sind.

4. Filtergewebe nach Anspruch 1, **dadurch gekennzeichnet, dass** jeder zweite und dritte oder jeder zweite oder jeder dritte oder jeder vierte Kettfaden (11) aus ultrahochmolekularem Polyethylen besteht.

5. Filtergewebe nach Anspruch 1, **dadurch gekennzeichnet, dass** alle Kettfäden (11, 12) oder mehr als 90% der Kettfäden (11, 12) aus ultrahochmolekularem Polyethylen bestehen.

6. Filtergewebe nach Anspruch 1, **dadurch gekennzeichnet, dass** die nicht aus ultrahochmolekularem Polyethylen bestehenden Kettfäden und insbesondere jeder dritte Kettfaden (12) oder jeder zweite Kettfaden (12) oder jeder zweite und dritte Kettfaden (12) oder jeder zweite dritte und vierte Kettfaden (12) aus einem Polyolefin und insbesondere aus Polypropylen besteht.

7. Filtergewebe nach einem der Ansprüche 1 bis 6, **dadurch gekennzeichnet, dass** die Kettfäden (11, 12) und die Schussfäden (14) derart miteinander verwoben sind, dass ein größerer Teilabschnitt der Kettfäden (11, 12) in der Gebrauchslage auf der dem Filterkuchen zugekehrten Seite (18) als auf der dem Filterkuchen abgekehrten Seite (16) des Filtergewebes (10) verläuft.

8. Filtergewebe nach einem der Ansprüche 1 bis 7, **dadurch gekennzeichnet, dass** die Kettfäden (11, 12) mit den Schussfäden (14) über eine Köperbindung miteinander verwebt sind derart, dass wenigstens ein Kettfaden (11, 12) auf der dem Filterkuchen zugekehrten Seite (18) über zwei oder mehrere benachbarte Schussfäden (14) und auf der dem Filterkuchen abgekehrten Seite (16) unter einem Schussfaden (14) verläuft.

9. Filtergewebe nach Anspruch 1, **dadurch gekennzeichnet, dass** zumindest die Kettfäden (11) aus ultrahochmolekularem Polyethylen auf der dem Filterkuchen zugekehrten Seite (18) über zwei oder mehrere benachbarte Schussfäden (14) und auf der dem Filterkuchen abgekehrten Seite (16) unter einem Schussfaden (14) verlaufen.

10. Filtergewebe nach einem der Ansprüche 1 bis 9, **dadurch gekennzeichnet, dass** die Schussfäden (14) aus einem Polyolefin und insbesondere aus Polypropylen bestehen.

11. Filtergewebe nach einem der Ansprüche 1 bis 10, **dadurch gekennzeichnet, dass** die Kettfäden (11) zumindest teilweise Multifilamentfäden sind.

12. Filtergewebe nach einem der Ansprüche 1 bis 11, **dadurch gekennzeichnet, dass** die Schussfäden (14) zumindest teilweise Monofilamentfäden sind.

13. Filtergewebe nach einem der Ansprüche 1 bis 12, **dadurch gekennzeichnet, dass** nur die Kettfäden ganz oder teilweise aus ultrahochmolekularem Polyethylen bestehen.

14. Verwendung eines Filtergewebes beziehungsweise Filtertuchs gemäß einem der vorhergehenden Ansprüche in einer Filterpresse.

15. Verwendung nach Anspruch 14, **dadurch gekennzeichnet, dass** die Seite mit dem höheren Anteil an UHMWPE-Fäden in der montierten Lage dem Filterkuchen zugewandt ist.
